# EUROPÄISCHE PATENTSCHRIFT

(11) **EP 2 722 974 B1**
(45) Veröffentlichungstag und Bekanntmachung des Hinweises auf die Patenterteilung: **27.09.2017**
(21) Anmeldenummer: 13189464.4
(22) Anmeldetag: 21.10.2013
(51) Int. Cl.: H02K 5/10, B23D 45/16, H02K 7/14, A22B 5/00, H02K 21/16, H02K 21/00

(54) **Handhaltbare Fleischerei-Maschine mit dichtem Gehäuse**
Hand-held butcher's machine with sealed casing
Machine de boucherie pouvant être tenue à la main et dotée d'un boîtier étanche

(30) Priorität: 19.10.2012 DE 102012219160
(43) Veröffentlichungstag der Anmeldung: 23.04.2014
(73) Patentinhaber: SCHMID & WEZEL GmbH & Co., 75433 Maulbronn (DE)
(72) Erfinder: Andjelkovic, Nenad, 76676 Graben-Neudorf (DE); Köhler, Ralph, 75045 Walzbachtal (DE)
(74) Vertreter: DREISS Patentanwälte PartG mbB

(56) Entgegenhaltungen:
- EP-A1- 1 211 787
- WO-A1-2012/022331
- DE-A1- 10 201 012
- DE-A1-102007 012 287
- DE-A1-102007 047 573
- FR-A- 1 375 986

## Beschreibung

Die Erfindung betrifft eine handhaltbare und handhabbare Fleischereimaschine nach dem Oberbegriff des Anspruchs 1. Eine solche Fleischereimaschine ist in Form eines Trimmers aus der DE 10 2007 012 287 A1 bekannt. Dieser Trimmer weist ein Kreismesser mit einem in das Kreismesser integrierten Rotor eines permanent erregten Synchronmotors auf. Die Magneten des Synchronmotors sind in das Kreismesser integriert. Aus der WO 2012/022331 A1 ist eine Fleischereimaschine in Form eines Trimmers bekannt, der mit einem Messer-Schnellwechselsystem ausgerüstet ist. Das Kreismesser des Trimmers wird wahlweise durch einen pneumatischen oder elektrischen Antrieb angetrieben. Aus der DE 10 2007 047 573 A1 ist ein Elektromotor mit einem Gehäuse bekannt, das zur Verbesserung des Reinigungsverhaltens auf der Außenseite eine organische, nicht-metallische Beschichtung aufweist. Der Motor kann ein permanent erregter Synchronmotor sein. Das Gehäuse ist an einer Seite offen und mit einem Flansch versehen, welcher zur Montage des Motors dient. Zur Erzielung eines abgedichteten elektrischen Anschlusses ist eine Anschlussbox vorgesehen, die außerhalb des Gehäuses an dem Gehäuse befestigt ist.

Die Erfindung betrifft insbesondere Fleischereimaschinen in Form von Kreissägen und Stichsägen. Als Beispiel wird auf die Zerlegesäge EFA85 der Anmelderin verwiesen.

Solche Fleischereimaschinen sind per se bekannt und dienen zum Zerlegen von Schlachttieren wie Schweinen und Rindern. Beispiele solcher Maschinen sind Kreissägen und Stichsägen. Bekannte Fleischereimaschinen dieser Art weisen eine Masse von bis zu 10 kg und Antriebsleistungen bis zu etwa 1000 bis 2000 Watt auf. Beim Arbeiten mit diesen Maschinen werden Knochen und Gewebe der Schlachttiere durchtrennt. Die Maschine kommen daher laufend mit Blut, Fleisch und Knochenmehl in Berührung und müssen aus hygienischen Gründen regelmäßig aufwändig gereinigt werden.

Bisher werden für den elektrischen Antrieb handgehaltener Fleischereimaschinen in Form von Kreissägen oder Stichsägen Elektromotoren in Form von Asynchronmotoren (wie bei EFA 85) oder in Form von Bürsten aufweisenden Universalmotoren verwendet. Um die Verlustwärme des Elektromotors im Betrieb abzuführen und um die Gehäusetemperatur zu begrenzen, weisen bekannte Fleischereimaschinen in Form von Kreissägen oder Stichsägen eine Gebläsekühlung in Verbindung mit einer offenen, eine Belüftung erlaubenden Bauweise auf. Die dafür erforderlichen Öffnungen im Gehäuse erhöhen die Anfälligkeit für eine Verschmutzung mit Staub und für ein Eindringen von Feuchtigkeit. Beides erhöht die Gefahr, dass ein Bediener bei der Handhabung der Maschine einen elektrischen Schlag erleidet. Darüber hinaus erschweren die Öffnungen eine effiziente Reinigung der Maschinen von Blut Geweberesten und Knochenmehl, weil beim Reinigen verwendete Flüssigkeiten oder Heißdampf über die Öffnungen in das Gehäuse eindringen könnten.
Von dem eingangs genannten Trimmer unterscheidet sich die vorliegende Erfindung durch die kennzeichnenden Merkmale des Anspruchs 1. Diese sehen vor, dass das Gehäuse einen koaxial zu einem drehbaren Rotor des Elektromotors ausgerichteten hülsenförmigen Mantel und einen ersten Deckel sowie einen zweiten Deckel aufweist, die jeweils eines der beiden Enden des hülsenförmigen Mantels zwischen Deckel und Mantel dicht abschließen, und wobei das Gehäuse auf der der Abtriebsseite gegenüberliegenden Seite des Elektromotors einen zweiten Lagerschild für den Rotor aufweist, wobei der zweite Lagerschild ein Bestandteil des hülsenförmigen Mantels ist, so dass der Mantel mit dem zweiten Lagerschild einstückig und stoffschlüssig zusammenhängt und wobei der zweite Lagerschild den vom hülsenförmigen Mantel umgebenen Innenraum in einen ersten becherartig ausgestalteten Teilraum und einen zweiten becherartig ausgestalteten Teilraum trennt, wobei der erste Teilraum den Elektromotor aufnimmt und vom ersten Deckel gegen die Umgebung dicht abgeschlossen wird und der zweite Teilraum eine Steuerelektronik aufnimmt und von dem zweiten Deckel dicht gegen die Umgebung abgeschlossen wird.
Bereits nach dem Oberbegriff des Anspruchs1 weit das Gehäuse insbesondere keine Öffnungen auf, die eine Durchströmung des Gehäuses mit Kühlluft erlauben. Als Folge umgibt das Gehäuse den elektrischen Antrieb vollständig. Die für das Herausführen einer Abtriebswelle und für die Energieversorgung des elektrischen Antriebs erforderlichen Durchführungen können dabei in Bezug auf eine Dichtigkeit des Gehäuses in erster Näherung vernachlässigt werden, weil sie allenfalls kleine Spalte aufweisen, die im Vergleich mit üblichen Belüftungsöffnungen wie Schlitzen nicht ins Gewicht fallen.
Es ist daher gerechtfertigt, die Ummantelung des elektrischen Antriebs durch das Gehäuse als vollständig zu bezeichnen. Diese vollständige Ummantelung erlaubt insbesondere eine sehr effiziente Reinigung der Maschine, weil Reinigungsflüssigkeiten und/oder Heißdampf eingesetzt werden könne, ohne dass die Gefahr besteht, dass diese Medien in das Innere des Gehäuse gelangen und dort Schaden anrichten können.

Diese Gefahr wird durch eine bevorzugte Ausgestaltung weiter verringert, bei der die Durchführungen gegen ein Eindringen von Staub und spritzenden Flüssigkeiten abgedichtet sind.

Die dicht geschlossene Bauweise erlaubt insgesamt eine Zeit und damit Kosten sparende und dabei gründliche Reinigung der Geräte zum Beispiel mit einem Dampfstrahler.

Der Elektromotor ist ein permanent erregter Synchronmotor.

Bisher werden für den elektrischen Antrieb handgehaltener Fleischereimaschinen in Form von Kreissägen oder Stichsägen Asynchronmotoren oder Bürsten aufweisende Universalmotoren verwendet.

Die Bezeichnung als Asynchronmotor weist darauf hin, dass sich im Betrieb ein Schlupf zwischen dem Läufer und dem Drehfeld des Stators einstellt, so dass der Läufer sich nicht synchron mit dem Drehfeld bewegt. Asynchronmotoren sind Induktionsmaschinen, bei denen ein durch den Stator erzeugtes Drehfeld Induktionsströme in Wicklungen des Läufers erzeugt. Durch den Ohm'schen Widerstand der Läuferwicklungen und die Induktionsströme wird Wärme im Rotor freigesetzt. Dieser wird in der Regel durch ein Gebläse gekühlt, wobei ein Luftaustausch mit der Umgebung über Öffnungen im Gehäuse erfolgt.

Asynchronmotoren zeichnen sich durch ein niedriges Kipp- / Blockiermoment aus, was die Handhabung bei der Arbeit mit der Maschine erschwert. Nachteilig ist, dass Asynchronmotoren einen großen Durchmesser, eine große Masse und ein großes Volumen aufweisen. Außerdem können sie nur mit niedrigen Drehzahlen betrieben werden (zum Beispiel ca 1500 Umdrehungen pro Minute).

Universalmotoren weisen darüber hinaus den Nachteil eines schlechten Wirkungsgrades auf. Als Folgenachteil ergibt sich eine hohe Verlustwärme, die im Betrieb abgeführt werden muss. Der Wirkungsgrad von bisher in Fleischereimaschinen der eingangs genannten Art eingesetzten Elektromotoren liegt zwischen 60% und 70%, so dass bereits bei einer Leistung von 1000 Watt eine als Wärme auftretende Verlustleistung von 300 bis 400 Watt abgeführt werden muss. Um diese Wärme aufnehmen zu können, ist eine große Wärmekapazität und damit eine unerwünscht große Masse erforderlich, oder es müssen unerwünscht hohe Gehäusetemperaturen (zum Beispiel mehr als 50 °C) in Kauf genommen werden.

Universalmotoren weisen in der Regel Strom führende Bürsten und einen Kommutator auf, der sich im berührenden Kontakt mit den Bürsten dreht. Diese Art der Kommutierung verursacht einen hohen Verschleiss, so dass sich insbesondere bei einer professionellen Verwendung ein unerwünschter Wartungsbedarf ergibt. Außerdem sind hohe Einschaltströme für das Anlaufen des Motors erforderlich. Dies verursacht einen starken Verschleiss bei den dafür verwendeten elektrischen Schaltern. Weitere Nachteile von Universalmotoren sind, dass diese im Verhältnis zu ihrer effektiven Ausgangsleistung groß und schwer sind, was die Handhabung erschwert.

Permanent erregte Synchronmotoren zeichnen sich dagegen dadurch aus, dass der Läufer keine stromdurchflossenen Wicklungen, sondern Permanentmagnete aufweist, die von einem durch Stromflüsse in Statorwicklungen erzeugten Drehfeld angetrieben werden. Es treten daher keine Ohm'schen Verluste im Rotor auf, die diesen erwärmen würden. Als Folge ist auch eine Anströmung des Läufers mit kühler Umgebungsluft nicht erforderlich. Die Bezeichnung als Synchronmotor weist darauf hin, dass sich der Läufer im Betrieb synchron mit dem Drehfeld des Stators dreht.

In der Kombination ergeben sich die folgenden Vorteile: Das Volumen und Gewicht sowie die Verlustleistungen und damit die Eigenerwärmung des elektrischen Antriebs werden wesentlich reduziert. Dadurch ergibt sich aus ergonomischen Gründen eine bessere Handhabbarkeit im Betrieb. Der Rotor hat ein geringeres Massenträgheitsmoment, somit ist sowohl die zur positiven/negativen Beschleunigung des Motors einzuspeisende elektrische eingesetzte Energie als auch die Beschleunigungszeit geringer als bei bekannten Maschinen.

Synchronmotoren stellen bereits bei niedriger Drehzahl ein maximales Drehmoment bereit, so dass gegebenenfalls auf ein Untersetzungsgetriebe verzichtet werden kann. Die Erfindung soll aber nicht auf Maschinen ohne Untersetzungsgetriebe beschränkt sein. Ein wesentlich erhöhter Wirkungsgrad des die mechanischen Komponenten mit enthaltenden Triebstrangs sowie eine hohe Energieeffizienz sind die Folge. Der Wirkungsgrad von Synchronmotoren ist insbesondere höher als bei den bisher in diesem technischen Gebiet eingesetzten Universalmotoren und Asynchronmotoren und kann Werte von bis zu 90% erreichen. Bei 1000 Watt Antriebsleistung muss dann nur noch eine Wärmeleistung von 100 Watt abgeführt werden, also nur etwa ein Viertel bis ein Drittel der beim relevanten Stand der Technik abzuführenden Wärmeleistung.

Durch den gegebenenfalls möglichen Wegfall eines Untersetzungsgetriebes werden zum Beispiel bei Kreissägen höhere Drehzahlen des Sägeblatts erzielt, was zu dem Vorteil einer höheren Schnittleistung beim Schneiden von Knochen oder Fleisch führt.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in der Zeichnung dargestellt und werden in der nachfolgenden Beschreibung näher erläutert. Dabei zeigen, jeweils in schematischer Form:
- Figur 1: eine perspektivische Darstellung einer aufgeschnittenen Fleischereimaschine als Ausführungsbeispiel der Erfindung; und
- Fig. 2: eine Ausgestaltung einer abgedichteten Durchführung für die Versorgung einer Steuerelektronik der Fleischereimaschine mit elektrischer Energie..

Im Einzelnen zeigt die Figur 1 eine Kreissäge als Ausführungsbeispiel einer Fleischereimaschine 10. Die Fleischereimaschine 10 weist einen ersten Griff 12 und einen zweiten Griff 14 auf, die zur manuellen Handhabung der Maschine 10 dienen. Der erste Griff 12 weist ein Bedienelement 16, auf, mit dem der mit der Maschine arbeitende Werker die Maschine steuert, indem er sie zum Beispiel einschaltet und ausschaltet. Ein optionaler Henkel 18 dient zum Einhängen der Maschine in eine von der Decke eines Arbeitsraums herabhängende federnde Aufhängung, so dass der Werker vom Gewicht der Maschine entlastet wird. Fig. 1 zeigt damit insbesondere eine handhaltbare und handhabbare Fleischereimaschine 10.

Die Maschine 10 weist ein Gehäuse 20 und einen elektrischen Antrieb auf, der einen Elektromotor 22 aufweist. Das Gehäuse 10 umfasst in der dargestellten Ausgestaltung einen koaxial zu einem drehbaren Rotor 22.1 des Elektromotors 22 ausgerichteten hülsenförmigen Mantel 20.1 und einen ersten Deckel 20.2 sowie einen zweiten Deckel 20.3, die jeweils eine der beiden Enden des hülsenförmigen Mantels zwischen Deckel und Mantel dicht abschließen. Die Abdichtung wird dabei in der dargestellten Ausgestaltung durch O-Ringe 24, 26 weiter verbessert.

Die Maschine 10 zeichnet sich dadurch aus, dass das Gehäuse 20 nur solche Öffnungen 28, 30 aufweist, die einer Durchführung eines Abtriebs 32 des elektrischen Antriebs oder einer Versorgung des elektrischen Antriebs mit elektrischer Energie oder einer Steuerung des elektrischen Antriebs dienen. In der dargestellten Ausgestaltung dient die Öffnung 28 der Durchführung des Abtriebs 32, und die Öffnung 30 dient der Versorgung mit elektrischer Energie, wobei ein hierfür dienendes Kabel in der Fig. 1 aus Gründen der Übersichtlichkeit nicht dargestellt worden ist.

In der dargestellten Ausgestaltung sind die Durchführungen 28 und 30 gegen ein Eindringen von Staub und spritzenden Flüssigkeiten abgedichtet. Im Fall der Durchführung 28 erfolgt die Abdichtung durch eine Manschette oder einen Wellendichtring 34. Im Fall der Durchführung 30 erfolgt die Abdichtung durch eine Kabelverschraubung mit einer nicht dargestellten Überwurfmutter, die beim Anziehen einen das Kabel umgebenden O-Ring quetscht und dadurch Spalte zwischen Kabel und O-Ring-Innenrand sowie zwischen O-Ring Außenrand und einer Innenseite der Überwurfmutter schließt. Die Überwurfmutter wird zum Beispiel auf eine in der Öffnung 30 fest sitzende Kabeldurchführung 36 aus Kunststoff oder aus Metall aufgeschraubt.

Der elektrische Antrieb ist in dem Gehäuse 20 angeordnet. Der Elektromotor 22 ist als permanent erregter Synchronmotor verwirklicht. Wie bereits erwähnt, zeichnen sich permanent erregte Synchronmotoren dadurch aus, dass im Rotor keine Ohm'schen Verluste auftreten, die diesen erwärmen würden. Als Folge ist auch eine Gebläsekühlung des Läufers nicht erforderlich. Die Wärmeabfuhr über die Rotorwelle ist ebenfalls verringert, was zu dem zusätzlichen Vorteil einer verringerten thermischen Belastung der Lager der Drehlagerung des Rotors führt. Die Bezeichnung als Synchronmotor weist darauf hin, dass sich der Läufer im Betrieb synchron mit dem Drehfeld des Stators dreht.

Der erste Deckel 20.2 weist in der dargestellten Ausgestaltung die Öffnung 28 als Durchführung für den Abtrieb des Elektromotors auf und ist als Lagerschild für eine abtriebsseitige Drehlagerung des Rotors 22.1 eingerichtet.

In einer bevorzugten Ausgestaltung ist ein Stator 22.2 des Elektromotors 22 mit seinen Statorwicklungen, die den das Drehfeld erzeugenden Strom tragen, in Wärme leitendem thermischen Kontakt mit dem Gehäuse 20 im Gehäuse 20 angeordnet. Dabei ist bevorzugt, dass der thermische Kontakt durch eine Wärme leitende Vergussmasse 22.3 hergestellt wird, die einen zwischen dem Stator 22.2 und dem Gehäuse 20 existierenden Spalt ausfüllt.

Bei einem permanent erregten Synchronmotor sind die Statorwicklungen das Bauteil, in dem fast alle Wärme erzeugt wird. Diese Wärme kann mit der beschriebenen Ausgestaltung effektiv und effizient an das Gehäuse abgeleitet werden.

Das Gehäuse ist bevorzugt aus Metall, wie es für Fleischereimaschinen üblich ist. Dies hat hier den zusätzlichen Vorteil, dass das Metallgehäuse mit seiner hohen Wärmekapazität als effektives Kühlelement genutzt werden kann. Die Abgabe der Wärme an die Umgebungsluft erfolgt dann durch Konvektion.

Auf der der Abtriebsseite gegenüberliegenden Seite des Elektromotors 22 weist das Gehäuse einen zweiten Lagerschild 38 für den Rotor 22. 1 auf. In der dargestellten Ausgestaltung ist das zweite Lagerschild 38 ein Bestandteil des hülsenförmigen Mantels, so dass der Mantel mit dem zweiten Lagerschild einstückig und stoffschlüssig zusammenhängt. Dabei trennt. der zweite Lagerschild den vom hülsenförmigen Mantel umgebenen Innenraum in einen ersten Teilraum und einen zweiten Teilraum. Die beiden Teilräume sind daher becherartig ausgestaltet. Der erste Teilraum nimmt den Elektromotor 22 auf und wird vom ersten Deckel 20.2 gegen die Umgebung dicht abgeschlossen. Der zweite Teilraum nimmt eine Steuerelektronik 40 auf und wird von dem zweiten Deckel 20.3 dicht gegen die Umgebung abgeschlossen.
Die auf diese Weise in das Gehäuse 20 integrierte Steuerelektronik 40 ist dazu eingerichtet, die Zufuhr elektrischer Leistung zu dem Elektromotor 22 elektronisch zu steuern. Die Steuerelektronik weist bevorzugt eine Umrichterelektronik mit Gleichspannungszwischenkreis und 3-phasiger IGBT Ausgangsbrücke (IGBT = insulated Gate Bipolar Transistor) auf und steuert die Motorbestromung sinusförmig, was einen optimalen Wirkungsgrad und ein verbessertes Geräuschverhalten ergibt. Die Steuerelektronik ist darüber hinaus bevorzugt dazu eingerichtet, eine Anlauframpe sowie eine Bremsrampe für einen kontrollierten Start und die aktive Bremsung des Antriebs beim Anhalten zu steuern. Darüber hinaus erlaubt die Elektronik eine Strombegrenzung bei einer Überlast um den Motor und die Elektronik zu schützen. In einer bevorzugten Ausgestaltung ist zusätzlich eine Überwachung der Wicklungstemperatur vorgesehen.
Eine elektronische Steuerung des Elektromotors ergibt eine verbesserte Handhabung und eine Erweiterung des Anwendungsspektrums. Im Einzelnen lässt sich ein sicheres und schonendes Start-Verhalten einstellen, indem das beim Anlauf bereits abrufbare max. Drehmoment zunächst reduziert und mit steigender Drehzahl rampenförmig hochgefahren wird. Darüber hinaus lassen sich weitere Sicherheits- Aspekte verwirklichen, zum Beispiel eine elektronische Regelung und Zurücknahme des das Drehfeld erzeugenden Wicklungsstroms bei übermäßig großer Belastung, die ohne solche Maßnahmen den Wicklungsstrom unerwünscht stark ansteigen lassen würde. Eine dynamische Anpassung an verschiedene Lastfälle ist möglich.

Außerdem kann eine mechanische, verschleissbehaftete Bremse (nach Norm muss das Kreissägeblatt beim Abschalten innerhalb von 3 sek. zum Stillstand kommen) entfallen, da die integrierte Steuerelektronik eine verschleissfreie elektrische Bremsung erlaubt. Hierdurch entfallen auch Wartungs- und Einstellarbeiten, die bei einer mechanischen Bremse anfallen würden. Dies gilt auch dann, wenn aus Sicherheitsgründen eine mechanische Bremse noch vorhanden ist, weil diese wegen der Unterstützung durch die elektrische Bremsung nur noch in Ausnahmefällen oder in sehr verringertem Umfang eingestezt werden muss.

Durch die Anordnung der Steuerelektronik am Motor oder, wie dargestellt, am Lagerschild, sind im Vergleich zu einer Verwendung externer Umrichter nur sehr kurze Leitungen erforderlich, was Netz- und Abstrahlungsstörungen drastisch reduziert. Hierbei ist zu berücksichtigen, dass die Steuerung der Ströme in den Statorwicklungen im KHz-Frequenzbereich erfolgt, was bei externen Umrichtern dazu führen würde, dass die dann erforderlichen Verbindungen zwischen den Wicklungen und den Umrichtern wie Antennen wirken, die andere Geräte störende Signale abstrahlen.

Der erste Griff 12 ist in der dargestellten Ausgestaltung an den zweiten Deckel 20.3 montiert. Der erste Griff 12 trägt in seinem Inneren einen elektronischen Schalter 42, der somit außerhalb des hülsenförmigen Mantel angeordnet ist. Der Schalter 42 ist über einen in der Figur nicht dargestellten Steuerstromkreis mit der Steuerelektronik 40 gekoppelt und wird seinerseits durch das manuell betätigbare Bedienelement 16 betätigt, so dass ein Steuerstrom oder eine Steuerspannung im Steuerstromkreis durch den Werker mit dem Bedienelement vorgebbar ist. Die Steuerelektronik 40 ist dazu eingerichtet, die Zufuhr elektrischer Leistung zum Elektromotor 22 in Abhängigkeit vom Stromfluss oder der Spannung im Steuerstromkreis zusteuern.

Durch diese Art der Steuerung des Elektromotors über eine in die Maschine integrierte Steuerelektronik und den Steuerstromkreis kann ein elektromechanischer Schalter, der den ganzen Arbeitsstrom tragen müsste, entfallen. Der nur noch den Steuerstrom tragende elektromechanische Schalter für kleine Ströme hat eine höhere Lebensdauer, ist leichter im Maschinengehäuse unterzubringen und benötigt weniger Kraft zur Betätigung.

Zu Steuerungszwecken weist die Maschine 10 darüber hinaus eine Drehzahlsensorik 42 auf, die dazu eingerichtet und angeordnet ist, die Drehzahl des Rotors 22.1 zu erfassen und der Steuerelektronik 40 ein die Drehzahl abbildendes Signal zu übergeben. Die Drehzahlsensorik weist zum Beispiel einen am Lagerschild ortsfest montierten Hall-Sensor auf, dessen Hall-Spannung von einem mit dem Rotor drehfest gekoppelten Permanentmagneten synchron mit der Rotordrehung beeinflusst wird, so dass der Hall-Sensor auch eine die Winkelstellung des Rotors relativ zum Stator abbildende Information liefert.

Die Steuerelektronik ist dazu eingerichtet, die Zufuhr elektrischer Leistung zu den Statorwicklungen ergänzend in Abhängigkeit von der Drehzahl und/oder der Winkelstellung des Rotors zu steuern. Die Information über die Winkelstellung dient dabei dazu, die zeitliche Phasenfolge bei der Steuerung der Stromflüsse durch die Statorwicklungen so zu steuern, dass sich ein Drehfeld des Stators ergibt, welches den Permanentmagneten des Rotors mitnimmt.

In der dargestellten Ausgestaltung weist die Maschine 10 eine Werkzeugaufnahme auf, die starr mit dem Gehäuse 20 verbunden ist. Die Verbindung erfolgt in der dargestellten Ausgestaltung dadurch, dass die Werkzeugaufnahme ortsfest-starr an den ersten Deckel 20.2 montiert ist. In der dargestellten Ausgestaltung weist die Werkzeugaufnahme ein Kegelradgetriebe 46 auf, das dazu dient, ein in der Figur nicht dargestelltes, in der Werkzeugaufnahme gehaltenes Sägeblatt rotatorisch anzutreiben. Dazu ist eine Antriebswelle des Kegelradgetriebes drehfest mit einem Abtrieb des Elektromotors 22 verbunden.
In einer nicht dargestellten alternativen Ausgestaltung weist die Werkzeugaufnahme ein Exzentergetriebe auf, das die Drehbewegung des Abtriebs des Elektromotors 22 in eine oszillierende Hubbewegung umwandelt, um eine oszillierende Bewegung eines in der Werkzeugaufnahme aufgenommenen und gehaltenen Stichsägeblatts anzutreiben.

In einer weiteren, nicht dargestellten Ausgestaltung weist die Maschine 10 eine Werkzeugaufnahme und eine biegsame Welle auf, mit der die Werkzeugaufnahme an den Abtrieb des elektrischen Antriebs angekoppelt ist.

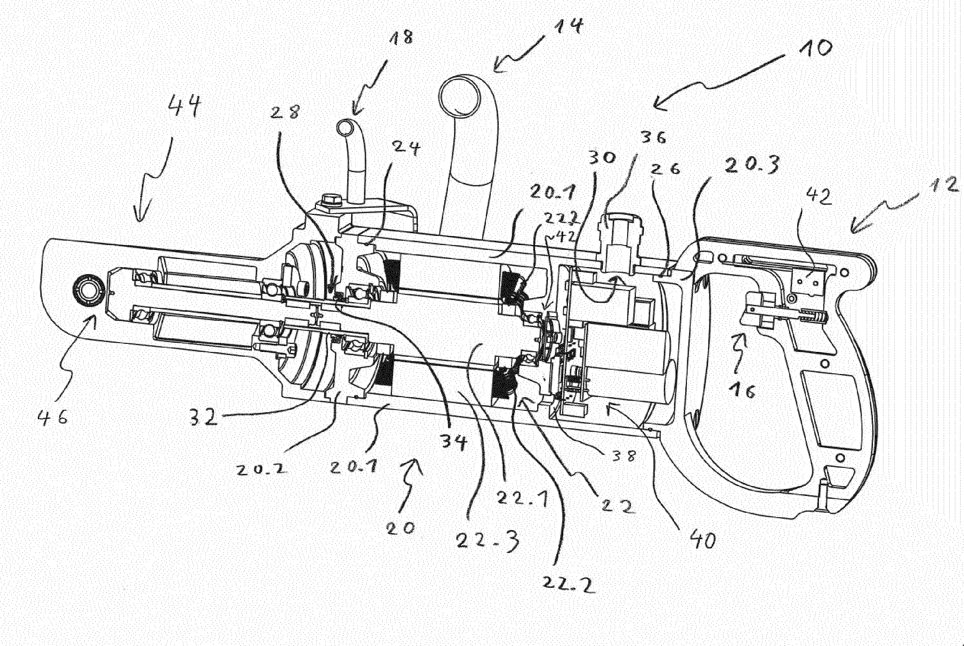

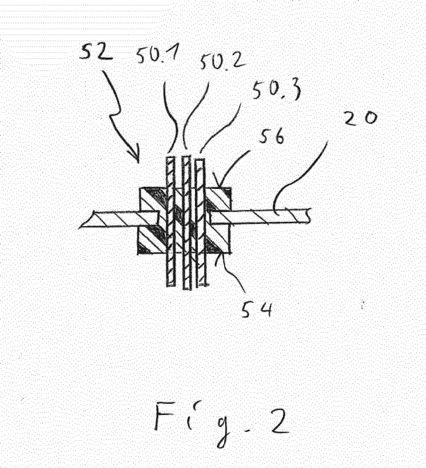

Fig. 2 zeigt eine alternative Ausgestaltung einer abgedichteten Durchführung für die Versorgung der Steuerelektronik mit elektrischer Energie. Die Durchführung erfolgt dabei über elektrische Leiter 50.1, 50.2, 50.3, beispielsweise Metallstifte, die in einen Stopfen 52 mit isolierender Vergussmasse eingegossen sind. Der Stopfen ist durch seine Größe und Form dazu eingerichtet, mit seinem äußeren Rand dicht und fest in die Öffnung 30 des Gehäuses 20 montiert zu werden und dort fest zu sitzen. Die Leiterstifte ragen sowohl an dem Steuerelektronik-seitigen Ende 54 des Stopfens als auch aus dem Umgebungsseitigen Ende 56 des Stopfens 52 aus der Vergussmasse heraus und können daher, z.B. mit Lötverbindungen oder Klemmverbindungen elektrisch angeschlossen werden. Eine solche Durchführung wird in einer Ausgestaltung auch für den Steuerstromkreis verwendet.

## Patentansprüche

1. Handhaltbare und handhabbare Fleischereimaschine (10) mit einem Gehäuse (20) und einem elektrischen Antrieb, der einen Elektromotor (22) aufweist, wobei der elektrische Antrieb in dem Gehäuse angeordnet ist, und wobei das Gehäuse nur solche Öffnungen (28, 30) aufweist, die einer Durchführung eines Abtriebs des elektrischen Antriebs, oder einer Versorgung des elektrischen Antriebs mit elektrischer Energie oder einer Steuerung des elektrischen Antriebs dienen, wobei der Elektromotor (22) ein permanent erregter Synchronmotor ist, **dadurch gekennzeichnet, dass** das Gehäuse einen koaxial zu einem drehbaren Rotor (22.1) des Elektromotors (22) ausgerichteten hülsenförmigen Mantel (20.1) und einen ersten Deckel (20.2) sowie einen zweiten Deckel (20.3) aufweist, die jeweils eines der beiden Enden des hülsenförmigen Mantels zwischen Deckel und Mantel dicht abschließen, und wobei das Gehäuse auf der Abtriebsseite gegenüberliegenden Seite des Elektromotors (22) einen zweiten Lagerschild (38) für den Rotor (22.1) aufweist, wobei der zweite Lagerschild 38 ein Bestandteil des hülsenförmigen Mantels ist, so dass der Mantel mit dem zweiten Lagerschild einstückig und stoffschlüssig zusammenhängt und wobei der zweite Lagerschild den vom hülsenförmigen Mantel umgebenen Innenraum in einen ersten becherartig ausgestalteten Teilraum und einen zweiten becherartig ausgestalteten Teilraum trennt, wobei der erste Teilraum den Elektromotor (22) aufnimmt und vom ersten Deckel (20.2) gegen die Umgebung dicht abgeschlossen wird und der zweite Teilraum eine Steuerelektronik (40) aufnimmt und von dem zweiten Deckel (20.3) dicht gegen die Umgebung abgeschlossen wird.

2. Fleischereimaschine (10) nach Anspruch 1, **dadurch gekennzeichnet, dass** die Durchführungen gegen ein Eindringen von Staub und spritzenden Flüssigkeiten abgedichtet sind.

3. Fleischereimaschine (10) nach einem der vorhergehenden Ansprüche, **dadurch gekennzeichnet, dass** der erste Deckel eine Durchführung (28) für einen Abtrieb des Elektromotors aufweist und als Lagerschild für eine abtriebsseitige Drehlagerung des Rotors eingerichtet ist.

4. Fleischereimaschine (10) nach einem der vorhergehenden Ansprüche, **dadurch gekennzeichnet, dass** ein Stator (22.2) des Elektromotors in Wärme leitendem thermischen Kontakt mit dem Gehäuse im Gehäuse angeordnet ist.

5. Fleischereimaschine (10) nach Anspruch 4, **dadurch gekennzeichnet, dass** der thermische Kontakt durch eine Wärme leitende Vergussmasse (22.3) hergestellt wird, die einen zwischen dem Stator und dem Gehäuse existierenden Spalt ausfüllt.

6. Fleischereimaschine (10) nach einem der vorhergehenden Ansprüche, **gekennzeichnet durch** eine in das Gehäuse integrierte Steuerelektronik (40), die dazu eingerichtet ist, die Zufuhr elektrischer Leistung zu dem Elektromotor zu steuern.

7. Fleischereimaschine (10) nach Anspruch 6, **gekennzeichnet durch** einen außerhalb der Hülse angeordneten Schalter (42), der über einen Steuerstromkreis mit der Steuerelektronik gekoppelt ist und der seinerseits durch ein manuell betätigbares Bedienelement (16) betätigt wird, wobei die Steuerelektronik dazu eingerichtet ist, die Zufuhr elektrischer Leistung zum Elektromotor in Abhängigkeit vom Stromfluss im Steuerstromkreis zusteuern.

8. Fleischereimaschine (10) nach Anspruch 6 oder 7, **gekennzeichnet durch** eine Drehzahlsensorik (42), die dazu eingerichtet und angeordnet ist, die Drehzahl des Rotors zu erfassen und der Steuerelektronik ein die Drehzahl abbildendes Signal zu übergeben.

9. Fleischereimaschine (10) nach Anspruch 8, **dadurch gekennzeichnet, dass** die Steuerelektronik dazu eingerichtet ist, die Zufuhr elektrischer Leistung ergänzend in Abhängigkeit von der Drehzahl des Rotors zu steuern.

10. Fleischereimaschine (10) nach einem der vorhergehenden Ansprüche, **dadurch gekennzeichnet, dass** sie eine Werkzeugaufnahme (44) aufweist, die starr mit dem Gehäuse verbunden ist.

11. Fleischereimaschine (10) nach einem der Ansprüche 1 bis 10, **dadurch gekennzeichnet, dass** sie eine Werkzeugaufnahme und eine biegsame Welle aufweist, mit der die Werkzeugaufnahme an den Abtrieb des elektrischen Antriebs angekoppelt ist.

## Claims

1. A handheld and manually manipulated butcher's machine (10), having a housing (20) and an electric drive that has an electric motor (22), the electric drive being located in the housing, and the housing has only such openings (28, 30) as serve as a duct for a power take-off of the electric drive or serve to supply the electric drive with electric power, or to control the electric drive, and the electric motor (22) is a permanently excited synchronous motor, **characterized in that** the housing has a sheathlike casing (20.1), oriented coaxially to a rotatable rotor (22.1) of the electric motor (22), and a first lid (20.2) as well as a second lid (20.3) each of which tightly closes off one of the two ends of the sheathlike casing between the lid and the casing, and the housing, on the side of the electric motor (22) opposite the power take-off side has a second end plate (38) for the rotor (22.1), and the second end plate is a component of the sheathlike casing, so that the casing is integrally and materially joined to the second end plate, and the second end plate divides the interior chamber surrounded by the sheathlike casing into a first cuplike subchamber and a second cuplike subchamber, and the first subchamber receives the electric motor (22) and is closed off to the environment tightly by the first lid (20.2), and the second subchamber receives an electronic control unit (40) and is tightly closed off from the environment by the second lid (20.3).

2. The butcher's machine (10) of claim 1, **characterized in that** the ducts are sealed off against from penetration by dust and splashing liquids.

3. The butcher's machine (10) of one of the foregoing claims, **characterized in that** the first lid has a duct (28) for a power take-off of the electric motor and is arranged as an end plate for a rotary bearing of the rotor, which bearing is located on the power take-off side.

4. The butcher's machine (10) of one of the foregoing claims, **characterized in that** a stator (22.2) of the electric motor is located in the housing in heat-conducting thermal contact with the housing.

5. The butcher's machine (10) of claim 4, **characterized in that** the thermal contact is established by means of a heat-conducting sealing compound (22.3), which fills the gap that exists between the stator and the housing.

6. The butcher's machine (10) of one of the foregoing claims, **characterized by** an electronic control unit (40) integrated with the housing, which electronic control unit is arranged for controlling the supply of electric power to the electric motor.

7. The butcher's machine (10) of claim 6, **characterized by** a switch (42) that is located outside the sheath and is coupled with the electronic control unit via a control current circuit and in turn is actuated by a manually actuatable user control element (16), and the electronic control unit is arranged for directing the supply of electric power to the electric motor as a function of the current flow in the control current circuit.

8. The butcher's machine (10) of claim 6 or 7, **characterized by** a RPM sensor unit (42), which is arranged and located for detecting the RPM of the rotor and forwarding a signal that depicts the RPM to the electronic control unit.

9. The butcher's machine (10) of claim 8, **characterized in that** the electronic control unit is arranged for additionally controlling the supply of electric power as a function of the RPM of the rotor.

10. The butcher's machine (10) of one of the foregoing claims, **characterized in that** it has a tool socket (44), which is rigidly connected to the housing.

11. The butcher's machine (10) of one of claims 1 through 10, **characterized in that** it has a tool socket and a flexible shaft, with which the tool socket is coupled to the power take-off of the electric drive.

## Revendications

1. Machine de boucherie portative (10) avec un boîtier (20) et un dispositif d'entraînement électrique qui comprend un moteur électrique (22), le dispositif d'entraînement électrique étant disposé dans le boîtier et le boîtier ne comportant que des ouvertures (28, 30) qui servent au passage d'une prise de force du dispositif d'entraînement électrique ou à l'alimentation du dispositif d'entraînement électrique en énergie électrique ou à une commande du dispositif d'entraînement électrique, le moteur électrique (22) étant un moteur synchrone excité en permanence, **caractérisée en ce que** le boîtier comprend une enveloppe (20.1) en forme de manchon orienté de manière coaxiale par rapport à un rotor rotatif (22.1) du moteur électrique (22) et un premier couvercle (20.2) ainsi qu'un deuxième couvercle (20.3), qui obturant chacun une des deux extrémités de l'enveloppe en forme de manchon de manière étanche entre le couvercle et l'enveloppe et le boîtier comprenant, sur le côté du moteur électrique (22) opposé au côté de sortie, un deuxième flasque (38) pour le rotor (22.1), le deuxième flasque (38) faisant partie intégrante de l'enveloppe en forme de manchon, de façon à ce que l'enveloppe soit reliée d'une seule pièce avec le deuxième flasque et le deuxième flasque séparant l'espace interne entouré par l'enveloppe en forme de manchon en une première partie en forme de godet et une deuxième partie en forme de godet, la première partie logeant le moteur électrique (22) et étant obturée de manière étanche par rapport à l'environnement par le premier couvercle (20.2) et la deuxième partie logeant une électronique de commande (40) et étant obturée de manière étanche par rapport à l'environnement par le deuxième couvercle (20.3).

2. Machine de boucherie portative (10) selon la revendication 1, **caractérisée en ce que** les passages sont étanchéifiés contre la pénétration de poussière et la projection de liquides.

3. Machine de boucherie portative (10) selon l'une des revendications précédentes, **caractérisée en ce que** le premier couvercle comprend un passage (28) pour une prise de force du moteur électrique et est conçu comme un flasque pour un logement rotatif du rotor côté sortie.

4. Machine de boucherie portative (10) selon l'une des revendications précédentes, **caractérisée en ce qu'**un stator (22.2) du moteur électrique est disposé dans le boîtier de façon à être en contact de conduction thermique avec le boîtier.

5. Machine de boucherie portative (10) selon la revendication 4, **caractérisée en ce que** le contact thermique est établi par une masse de scellement thermoconductrice (22.3) qui remplit un interstice existant entre le stator et le boîtier.

6. Machine de boucherie portative (10) selon l'une des revendications précédentes, **caractérisée par** une électronique de commande (40) intégrée dans le boîtier, qui est conçue pour commander l'alimentation du moteur électrique en puissance électrique.

7. Machine de boucherie portative (10) selon la revendication 6, **caractérisée par** un interrupteur (42) disposé à l'extérieur du manchon, qui est couplé par l'intermédiaire d'un circuit de commande, avec l'électronique de commande et qui est actionné de son côté par un élément de commande à actionnement manuel (16), l'électronique de commande étant conçue pour commander l'alimentation du moteur électrique en puissance électrique en fonction du flux de courant dans le circuit de commande.

8. Machine de boucherie portative (10) selon la revendication 6 ou 7, **caractérisée par** des capteurs de vitesse de rotation (42), qui sont conçus et disposés pour mesurer la vitesse de rotation du rotor et transmettre à l'électronique de commande un signal représentant la vitesse de rotation.

9. Machine de boucherie portative (10) selon la revendication 8, **caractérisée en ce que** l'électronique de commande est conçue pour commander l'alimentation en puissance électrique de manière complémentaire en fonction de la vitesse de rotation du rotor.

10. Machine de boucherie portative (10) selon l'une des revendications précédentes, **caractérisée en ce qu'**elle comprend un logement d'outil (44) qui est relié de manière rigide avec le boîtier.

11. Machine de boucherie portative (10) selon l'une des revendications 1 à 10, **caractérisée en ce qu'**elle comprend un logement d'outil et un arbre flexible avec lequel le logement d'outil est couplé à la sortie du dispositif d'entraînement électrique.
